(19) **Europäisches Patentamt** / **European Patent Office** / **Office européen des brevets**

(11) **EP 4 525 171 A1**

(12) **EUROPEAN PATENT APPLICATION**
published in accordance with Art. 153(4) EPC

(43) Date of publication:
**19.03.2025 Bulletin 2025/12**

(21) Application number: **23803011.8**

(22) Date of filing: **11.05.2023**

(51) International Patent Classification (IPC):
**H01M 50/342** (2021.01)

(52) Cooperative Patent Classification (CPC):
**H01M 50/3425; H01M 50/209; H01M 50/342;**
H01M 2200/20; H01M 2220/20; Y02E 60/10

(86) International application number:
**PCT/CN2023/093638**

(87) International publication number:
**WO 2023/217242 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.05.2022 CN 202221128933 U**

(71) Applicant: **BYD Company Limited**
**Shenzhen, Guangdong 518118 (CN)**

(72) Inventors:
• **WANG, Xinyue**
**Shenzhen, Guangdong 518118 (CN)**

• **CHEN, Chong**
**Shenzhen, Guangdong 518118 (CN)**
• **CHEN, Guangan**
**Shenzhen, Guangdong 518118 (CN)**
• **LIU, Xufeng**
**Shenzhen, Guangdong 518118 (CN)**
• **WANG, Cuicui**
**Shenzhen, Guangdong 518118 (CN)**

(74) Representative: **Mathys & Squire**
**The Shard**
**32 London Bridge Street**
**London SE1 9SG (GB)**

(54) **EXPLOSION-PROOF VALVE, BATTERY, BATTERY MODULE, BATTERY PACK AND VEHICLE**

(57) Provided is a vehicle (600), having a battery pack (500). The battery pack (500) comprises a battery (300) or a battery module (400). The battery module (400) comprises the battery (300). The battery (300) comprises an explosion-proof valve (200). The explosion-proof valve (200) comprises an explosion-proof valve body (100). The explosion-proof valve body (100) is provided with score grooves (11), and the score grooves (11) comprise two first score grooves (111), two second score grooves (112), and one third score groove (113). One end of each of the two first score grooves (111) and one end of each of the two second score grooves (112) are respectively connected to two ends of the third score groove (113). The other ends of the two first score grooves (111) extend in a direction away from each other, and the other ends of the second score grooves (112) extend in a direction away from each other. The explosion-proof valve body (100) comprises an opening area (10). In the depth direction of the score grooves, the outer edge of the orthographic projection of the opening area (10) is a predetermined opening boundary (131), and the area of the orthographic projection of the opening area (10) is (I), wherein S≥80 mm$^2$, c≥4 mm, and α≥30°.

FIG. 1

**Description**

**CROSS-REFERENCE TO RELATED APPLICATIONS**

This application claims priority to and benefits of Chinese Patent Application No. 202221128933.5, filed on May 12, 2022. The entire content of the above-referenced application is incorporated herein by reference.

**FIELD**

The present disclosure relates to the technical field of batteries, and specifically to an explosion-proof valve, a battery, a battery module, a battery pack, and a vehicle.

**BACKGROUND**

In the related art, an explosion-proof valve of a battery is usually welded to a cover plate of the battery. When the gas pressure in the battery exceeds the opening pressure of the explosion-proof valve, the explosion-proof valve can be opened to release the gas generated inside the battery, thereby preventing safety accidents such as explosion of the battery. However, when the pressure in the battery changes and the pressure in the battery becomes too high, the pressure cannot be relieved in a timely manner if the area of opening of the explosion-proof valve is unreasonable, affecting the safety of the battery and the entire battery system.

**SUMMARY**

The present disclosure aims to resolve at least one of the technical problems in the related art. Therefore, a first objective of the present disclosure is to provide an explosion-proof valve, which can make the area of opening of the explosion-proof valve body more reasonable, and can increase the speed of pressure relief when the explosion-proof valve is applied to a battery, thereby improving the safety of using the explosion-proof valve.

A second objective of the present disclosure is to provide a battery using the explosion-proof valve.

A third objective of the present disclosure is to provide a battery module using the battery.

A fourth objective of the present disclosure is to provide a battery pack using the battery module or the battery.

A fifth objective of the present disclosure is to provide a vehicle using the battery or the battery pack.

An embodiment of a first aspect of the present disclosure provides an explosion-proof valve, including: an explosion-proof valve body, the explosion-proof valve body having a scored groove, the scored groove including two first scored grooves, two second scored grooves, and a third scored groove, one end of each of the two first scored grooves and one end of each of the two second scored grooves being respectively connected to two ends of the third scored groove, an other end of one of the two first scored grooves extending away from an other end of the other of the two first scored grooves, an other end of one of the two second scored grooves extending away from an other end of the other of the two second scored grooves, a length of the third scored groove being defined as a, a distance between the other end of the first scored groove and the other end of the second scored groove being defined as b, a length of each of the first scored grooves and a length of each of the second scored grooves being equal and being both defined as c, an angle between the two first scored grooves and an angle between the two second scored grooves being equal and being both defined as $\alpha$, the explosion-proof valve body including an opening region, an outer edge of an orthographic projection of the opening region being a predetermined opening boundary in a depth direction of the scored groove, an area of the orthographic projection of the opening region being defined as S, S, c, and $\alpha$ respectively satisfying: $S = \dfrac{(a+b)\times c_2\sqrt{2(1-\cos\alpha)}}{2} + \dfrac{\pi c^2\alpha}{180}$, $S\geq 80$ mm$^2$, $c\geq 4$ mm, and $\alpha\geq 30°$,

in the depth direction of the scored groove, a first arc being defined between free ends of orthographic projections of the two first scored grooves, the first arc being centered at a vertex of the angle $\alpha$ between the two first scored grooves, a second arc being defined between free ends of orthographic projections of the two second scored grooves, the second arc being centered at a vertex of the angle $\alpha$ between the two second scored grooves, a first straight line being defined between free ends of the orthographic projections of the first scored groove and the second scored groove that are on the same side of the third scored groove, and the first arc, the second arc, and the two first straight lines jointly forming the predetermined opening boundary.

According to the explosion-proof valve of the embodiment of the present disclosure, the area S of opening of the explosion-proof valve body is reasonably designed by defining the value ranges of S, c, and $\alpha$. When the explosion-proof valve is applied to a battery and the internal pressure of the battery increases and needs to be relieved, the explosion-proof valve can be opened in a timely manner, so that the pressure can be relieved in a timely manner, thereby ensuring the usage safety of the battery.

In some examples, c further satisfies: c≤10 mm.

In some examples, α further satisfies: α≤150°.

In some examples, α satisfies: 10 mm≤a≤40 mm.

In some examples, b satisfies: 15 mm≤b≤50 mm.

In some examples, the third scored groove extends in a length direction of the explosion-proof valve body, one of the first scored grooves extends toward one side in a width direction of the explosion-proof valve body, the other of the first scored grooves extends toward another side in the width direction of the explosion-proof valve body, one of the second scored grooves extends toward one side in the width direction of the explosion-proof valve body, and the other of the second scored grooves extends toward an other side in the width direction of the explosion-proof valve body.

In some examples, the scored groove is of a centrosymmetric structure.

In some examples, a notch is formed on the explosion-proof valve body, and the scored groove is formed on a bottom wall of the notch.

In some examples, a side wall of the scored groove away from a center of the explosion-proof valve body is flush with a side wall of the notch away from the center of the explosion-proof valve body.

In some examples, the explosion-proof valve body includes a connection section, a buffer section, and a support section, the connection section is connected to an outer peripheral side of the support section, the support section is spaced apart from the connection section in a thickness direction of the support section, the buffer section is connected between the connection section and the support section, and the scored groove is formed on the support section.

In some examples, the explosion-proof valve body is of a flat sheet structure.

In some examples, the opening region is in an oblong shape.

In some examples, the explosion-proof valve body is an aluminum alloy part or a steel part.

An embodiment of a second aspect of the present disclosure provides a battery, including the explosion-proof valve according to the embodiment of the first aspect.

In some examples, an energy density of the battery is defined as E, where E satisfies: 200 wh/kg≤E≤280 wh/kg.

An embodiment of a third aspect of the present disclosure provides a battery module, including the battery according to the embodiment of the second aspect of the present disclosure.

An embodiment of a fourth aspect of the present disclosure provides a battery pack, including the battery according to the embodiment of the second aspect of the present disclosure or the battery module according to the embodiment of the third aspect of the present disclosure.

An embodiment of a fifth aspect of the present disclosure provides a vehicle, including the battery according to the embodiment of the second aspect of the present disclosure or the battery pack according to the embodiment of the fourth aspect of the present disclosure.

Additional aspects and advantages of the present disclosure will be partly given in and partly apparent from the description below, or understood through practice of the present disclosure.

## BRIEF DESCRIPTION OF THE DRAWINGS

The above and/or other additional aspects and advantages of the present disclosure become apparent and comprehensible from the description of embodiments in connection with accompanying drawings, in which:

FIG. 1 is a schematic diagram of an explosion-proof valve according to an embodiment of the present disclosure;

FIG. 2 is a schematic cross-sectional view of an explosion-proof valve according to an embodiment of the present disclosure;

FIG. 3 is a schematic diagram showing comparison between pressure relief rates of batteries of Comparative Example 1, Example 1, and Example 2 according to the present disclosure;

FIG. 4 is a schematic diagram showing comparison between pressure relief rates of batteries of Comparative Example 2, Example 3, and Example 4 according to the present disclosure;

FIG. 5 is a schematic diagram showing comparison between pressure relief rates of batteries of Comparative Example 3, Example 5, and Example 6 according to the present disclosure;

FIG. 6 is a schematic diagram of a vehicle according to an embodiment of the present disclosure;

FIG. 7 is a schematic diagram of a vehicle according to another embodiment of the present disclosure; and

FIG. 8 is a schematic diagram of a vehicle according to still another embodiment of the present disclosure.

In the drawings:

explosion-proof valve body 100;

opening region 10; scored groove 11; first scored groove 111; second scored groove 112; third scored groove 113; first straight line 12; first arc 13; predetermined opening boundary 131; second arc 132, notch 14;

connection section 20; buffer section 30; support section 40;
explosion-proof valve 200; battery 300; battery module 400; battery pack 500; vehicle 600.

## DETAILED DESCRIPTION

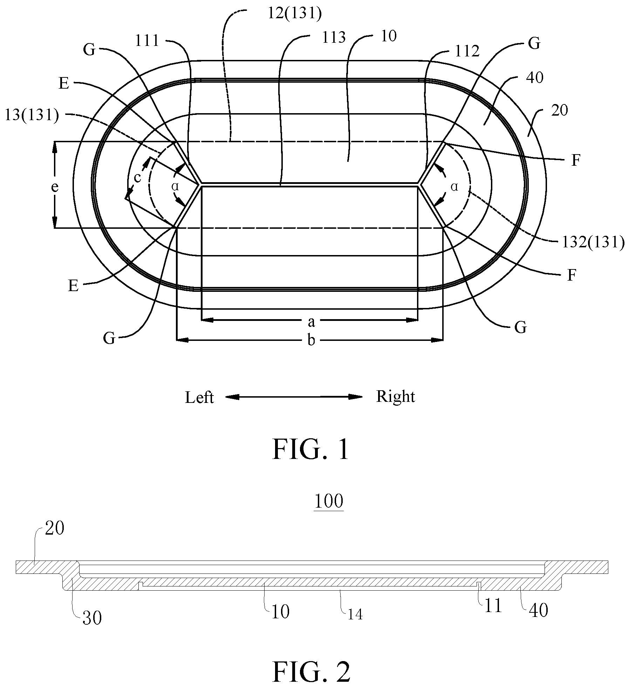

Embodiments of the present disclosure will be described in detail below. The embodiments described with reference to the accompanying drawings are merely examples. An explosion-proof valve 200 according to the embodiments of the present disclosure will be described below with reference to FIG. 1 to FIG. 2. The following description of the present disclosure is given with reference to an example where the explosion-proof valve 200 is mounted on a battery 300 and used to relieve the pressure of the battery 300 when the internal pressure of the battery 300 increases.

As shown in FIG. 1 and FIG. 2, an embodiment of a first aspect of the present disclosure provides an explosion-proof valve 200, including an explosion-proof valve body 100.

Specifically, the explosion-proof valve body 100 has a scored groove 11. In a depth direction of the scored groove 11 (i.e., a direction from a groove top to a groove bottom of the scored groove 11), a thickness of the explosion-proof valve body 100 at a position corresponding to the scored groove 11 is less than thicknesses of other portions of the explosion-proof valve body 100. When the explosion-proof valve 200 is applied to the battery 300, and the internal pressure of the battery 300 increases to reach an opening pressure of the explosion-proof valve 200, the pressure can blow open the scored groove 11 first to quickly discharge the gas, thereby realizing smooth pressure relief. When the explosion-proof valve body 100 is fixed to a housing of the battery 300 by welding, a welding seam is formed between the explosion-proof valve body 100 and the housing. Alternatively, when the explosion-proof valve body 100 is fixed to a cover plate of the battery 300 by welding, a welding seam is formed between the explosion-proof valve body 100 and the cover plate of the battery 300. An outer peripheral edge of the explosion-proof valve body 100 is at one-half a width of the welding seam. The width of the welding seam is a distance between an outer contour and an inner contour of an orthographic projection of the welding seam in the depth direction of the scored groove 11.

The scored groove 11 includes two first scored grooves 111, two second scored grooves 112, and a third scored groove 113. One end of each of the two first scored grooves 111 and one end of each of the two second scored grooves 112 are respectively connected to two ends of the third scored groove 113. An other end of one of the two first scored grooves 111 extends away from an other end of the other of the two first scored grooves 111. An other end of one of the two second scored grooves 112 extends away from an other end of the other of the two second scored grooves 112.

For example, in the example of FIG. 1, the end of each first scored groove 111 connected to the third scored groove 113 may be defined as a first end (i.e., a right end of the first scored groove 111), and the other end of each first scored groove 111 away from the third scored groove 113 is defined as a second end (i.e., a left end of the first scored groove 111). The end of each second scored groove 112 connected to the third scored groove 113 is defined as a third end (i.e., a left end of the second scored groove 112), and the other end of each second scored groove 112 away from the third scored groove 113 is defined as a fourth end (i.e., a right end of the second scored groove 112). The first ends of the two first scored grooves 111 are both connected to one end of the third scored groove 113, and a distance between the two first scored grooves 111 gradually increases in a direction from the first end to the second end (i.e., in a direction from right to left). Similarly, the third ends of the two second scored grooves 112 are both connected to the other end of the third scored groove 113, and a distance between the two second scored grooves 112 gradually increases in a direction from the third end to the fourth end (i.e., in a direction from left to right).

A length of the third scored groove 113 is defined as a, and a maximum distance between the other end of the first scored groove 111 (i.e., the second end) and the other end of the second scored groove 112 (i.e., the fourth end) is defined as b. For example, in the example of FIG. 1, the two first scored grooves 111 and the two second scored grooves 112 are respectively symmetrically distributed with respect to a length direction of the third scored groove 113 (e.g., the direction from left to right in FIG. 1). In this case, the maximum distance b may be a maximum distance between end portions at the second ends of the two first scored grooves 111 and end portions at the fourth ends of the second scored grooves 112. However, the present disclosure is not limited thereto.

A length of each of the first scored grooves 111 and a length of each of the second scored grooves 112 are equal and are both defined as c. An angle between the two first scored grooves 111 and an angle between the two second scored grooves 112 are equal and are both defined as $\alpha$. The explosion-proof valve body 100 includes an opening region 10. An outer edge of an orthographic projection of the opening region 10 is a predetermined opening boundary 131 in the depth direction of the scored groove 11. An area of the orthographic projection of the opening region 10 is defined as S, where S,

$$S = \frac{(a+b) \times c_2 \sqrt{2(1-\cos\alpha)}}{2} + \frac{\pi c^2 \alpha}{180}$$

c, and $\alpha$ respectively satisfy: , S≥80 mm$^2$, c≥4 mm, and $\alpha$≥30°.

In the depth direction of the scored groove 11, a first arc 13 is defined between free ends E of orthographic projections of the two first scored grooves 111. The first arc 13 is centered at a vertex of the angle $\alpha$ between the two first scored grooves 111. A second arc 132 is defined between free ends F of orthographic projections of the two second scored grooves 112. The second arc 132 is centered at a vertex of the angle $\alpha$ between the two second scored grooves 112. A first straight line 12 is defined between free ends G of the orthographic projections of the first scored groove 111 and the second scored groove 112 that are on the same side of the third scored groove 113. The first arc 13, the second arc 132, and the two first straight lines 12 jointly form the predetermined opening boundary 131.

It can be understood that an area of the orthographic projection of the opening region 10 in the depth direction of the scored groove 11 is an area of a region defined within the predetermined opening boundary 131. It should be noted that because widths of the first scored groove 111 and the second scored groove 112 are relatively small and can be ignored, the first arc 13 and the first straight line 12 approximately intersect at one point. The first arc 13 may be understood as: being defined by free ends closed to each other in the orthographic projections of the two first scored grooves 111. For example, in FIG. 1, the first arc 13 is defined by the free ends E at opposing sides of the orthographic projections of the two first scored grooves 111 located at the left end of the third scored groove 113. The second arc 132 may be understood as: being defined by free ends at opposing sides of the orthographic projections of the two second scored grooves 112. For example, in FIG. 1, the second arc 132 is defined by the free ends F at opposing sides of the orthographic projections of the two second scored grooves 112 located at the right end of the third scored groove 113. The first straight line 12 may be understood as: being defined by free ends at opposing sides of the orthographic projections of the first scored groove 111 and the second scored groove 112 located on the same side of the third scored groove 113. For example, in FIG. 1, the first straight lines 12 is defined by the free ends G at opposing sides of the orthographic projections of the first scored groove 111 and the second scored groove 112 above the third scored groove 113, and similarly, the other first straight line 12 is defined by the free ends G at opposing sides of the orthographic projections of the first scored groove 111 and the second scored groove 112 below the third scored groove 113.

The explosion-proof valve 200 may be arranged on one side surface of the housing of the prismatic battery 300. The opening region 10 in an oblong shape can better adapt to the shape of the housing of the battery 300, so that the area of the opening region 10 can be increased, and therefore the amount of gas discharged can be increased. Alternatively, the opening region 10 may be in an oval shape, etc. It can be understood that the specific shape of the opening region 10 may be set according to actual requirements to better meet practical applications.

The area of the orthographic projection of the opening region 10 of the explosion-proof valve body 100 can be designed more reasonably by defining the value ranges of S, c, and $\alpha$, so that the amount of gas discharged through the explosion-proof valve 200 per unit time can be effectively increased, thereby achieving a more ideal pressure relief effect. In addition, defining the area S of the orthographic projection of the opening region 10 of the explosion-proof valve body 100 can ensure the area of opening of the explosion-proof valve body 100 when the internal pressure of the battery 300 increases, to facilitate effective pressure relief to increase the safety of the battery 300, thereby reducing the possibility that the entire explosion-proof valve 200 cannot be opened in a timely manner and is blown open due to an excessively small area of opening, or avoiding dangerous situations such as explosion of the battery 300 due to the failure to relieve the pressure in a timely manner.

According to the explosion-proof valve 200 of the embodiment of the present disclosure, the area S of opening of the explosion-proof valve body 100 is reasonably designed by limiting the value ranges of S, c, and $\alpha$. When the explosion-proof valve 200 is applied to the battery 300 and the internal pressure of the battery 300 increases and needs to be relieved, the explosion-proof valve 200 can be opened in a timely manner, so that the pressure can be relieved in a timely manner, thereby ensuring the usage safety of the battery 300.

It can be understood that a cross-section of the scored groove 11 may be rectangular or inverted trapezoidal. "Cross-section" herein refers to: a plane parallel to the depth direction of the scored groove 11. When the cross-section of the scored groove 11 is inverted trapezoidal, the width of the scored groove 11 gradually decreases toward the groove bottom of the scored groove 11. In this case, a may be understood as a length of an outer edge at a groove top or opening of the third scored groove 113. b may be understood as a maximum distance between opposing sides at groove openings of the first scored groove 111 and the second scored groove 112 on the same side of the third scored groove 113. $\alpha$ may be understood as an angle between opposing outer edges at the groove openings of the first scored grooves 111, or an angle between opposing outer edges at the groove openings of the second scored grooves 112.

Further, c and $\alpha$ further satisfy: c≤10 mm, and $\alpha$≤150°. Therefore, by defining the upper limits of c and $\alpha$, the area S of the orthographic projection of the opening region 10 can be effectively ensured to avoid the phenomenon that a part of the area of the explosion-proof valve body 100 cannot be normally opened due to an excessively large value of $\alpha$, and the impact on the pressure relief capability of the explosion-proof valve 200 can also be avoided, thereby improving the structural stability of the explosion-proof valve 200.

In some embodiments, a and b respectively satisfy: 10 mm≤a≤40 mm, and 15 mm≤b≤50 mm. Therefore, by defining the ranges of a and b, the position of the scored groove 11 on the explosion-proof valve body 100 can be made more reasonable, so that the area of opening of the explosion-proof valve body 100 can be increased during pressure relief of the battery 300, thereby improving the usage safety of the battery 300.

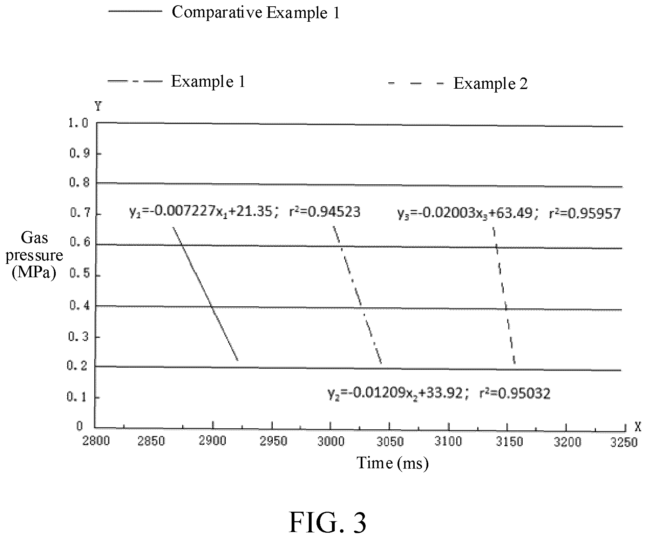

Comparative Examples 1 to 3 (i.e., related art) and Examples 1 to 6 (i.e., embodiments of the present disclosure) will be described below. Batteries in Comparative Examples 1 to 3 and batteries 300 in Examples 1 to 6 were tested respectively using a method specified in GB/T 31485-2015, and the pressure relief rate curves of the corresponding batteries 300 were recorded. Values of a, b, c, $\alpha$, and S of Comparative Examples 1 to 3 are selected from Table 1 below. Values of a, b, c, $\alpha$, and S of Examples 1 to 6 are selected from Table 2 below. The final test results are shown in FIG. 3 to FIG. 5.

Table 1

| No. | a (mm) | b (mm) | c (mm) | $\alpha$ (°) | S (mm²) |
|---|---|---|---|---|---|
| Comparative Example 1 | 8 | 13 | 4 | 20 | 51.27999554 |
| Comparative Example 2 | 8 | 13 | 3 | 30 | 45.67813393 |
| Comparative Example 3 | 8 | 15 | 3 | 20 | 40.67745665 |

Table 2

| No. | a (mm) | b (mm) | c (mm) | $\alpha$ (°) | S (mm²) |
|---|---|---|---|---|---|
| Example 1 | 10 | 15 | 4 | 30 | 73.40211735 |
| Example 2 | 15 | 20 | 6 | 60 | 245.1666411 |
| Example 3 | 18 | 34 | 8 | 80 | 399.2826303 |
| Example 4 | 25 | 40 | 7 | 100 | 204.8583362 |
| Example 5 | 32 | 46 | 8 | 120 | 324.1751609 |
| Example 6 | 40 | 50 | 10 | 150 | 610.6701385 |

As can be seen from the above, FIG. 3 is a graph showing the variation of gas pressure inside the battery during pressure relief when the pressure inside the battery is increased in Example 1, Example 2, and Comparative Example 1. As can be seen from the graph, the decreases in the gas pressure per unit time in Examples 1 and 2 are greater than the decrease in the gas pressure in Comparative Example 1.

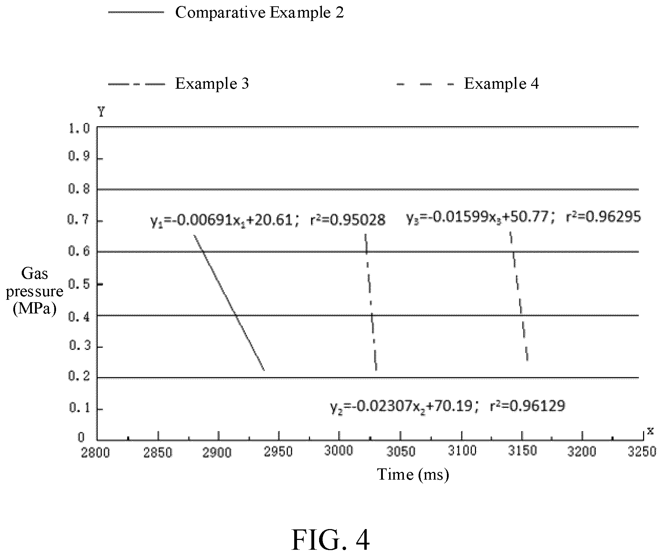

FIG. 4 is a graph showing the variation of gas pressure inside the battery during pressure relief when the pressure inside the battery is increased in Example 3, Example 4, and Comparative Example 2. As can be seen from the graph, the decreases in the gas pressure per unit time in Examples 3 and 4 are greater than the decrease in the gas pressure in Comparative Example 2.

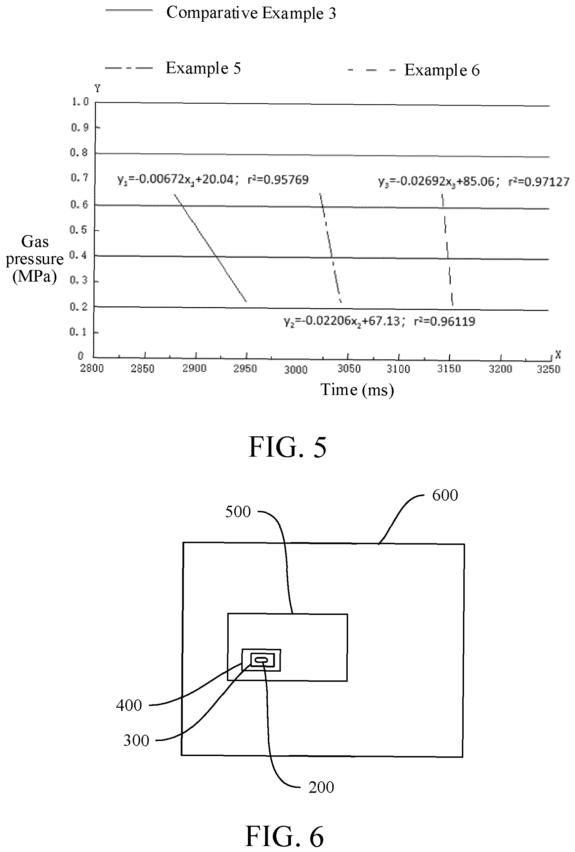

FIG. 5 is a graph showing the variation of gas pressure inside the battery during pressure relief when the pressure inside the battery is increased in Example 5, Example 6, and Comparative Example 3. As can be seen from the graph, the decreases in the gas pressure per unit time in Examples 5 and 6 are greater than the decrease in the gas pressure in Comparative Example 3.

Therefore, based on Examples 1 to 6, with the value ranges of a, b, c, and $\alpha$ that the embodiments of the present disclosure seek to protect, the area S of the orthographic projection of the opening region 10 of the explosion-proof valve body 100 can be effectively increased, to increase the amount of gas discharged through the explosion-proof valve 200 per unit time, thereby improving the safety of the battery 300 using the explosion-proof valve 200.

In some embodiments, a length of the scored groove 11 is defined as L, and L satisfies: L=a+4c. That is, the length of the scored groove 11 includes the lengths of two first scored grooves 111, the lengths of two second scored grooves 112, and the length of the third scored groove 113. The length of the first scored groove 111 is the same as the length of the second scored groove 112.

According to some embodiments of the present disclosure, referring to FIG. 1, the third scored groove 113 extends in a length direction of the explosion-proof valve body 100. One of the first scored grooves 111 extends toward one side in a width direction of the explosion-proof valve body 100, and the other of the first scored grooves 111 extends toward another side in the width direction of the explosion-proof valve body 100 (e.g., a vertical direction in FIG. 1). One of the second scored grooves 112 extends toward one side in the width direction of the explosion-proof valve body 100, and the other of the second scored grooves 112 extends toward an other side in the width direction of the explosion-proof valve body 100. In this way, the lengths of the first scored grooves 111, the second scored grooves 112, and the third scored groove 113 in the explosion-proof valve body 100 can be relatively increased, so that when the internal pressure of the battery 300 increases, the gas in the battery 300 can leak out along the first scored grooves 111, the second scored grooves 112, and the third scored groove 113. As such, the area of opening of the explosion-proof valve body 100 can be effectively increased, thereby further improving the usage safety of the explosion-proof valve 200.

Optionally, the scored groove 11 is of a centrosymmetric structure. That is, the two first scored grooves 111 and the two second scored grooves 112 are respectively symmetrically distributed in the length direction of the third scored groove 113, and the two first scored grooves 111 and the two second scored grooves 112 are symmetrically distributed in the width direction of the third scored groove 113. Therefore, the distribution of the scored groove 11 on the explosion-proof valve body 100 is increased, thereby achieving rapid pressure relief.

In some embodiments, referring to FIG. 2, a notch 14 is formed on the explosion-proof valve body 100, and the notch 14 is formed with an open opening. The open opening is provided at an end facing away from a center of the explosion-proof valve body 100. The scored groove 11 is formed on a bottom wall of the notch 14, and the scored groove 11 and the open opening are located on the same side in a thickness direction of the bottom wall. A side wall of the scored groove 11 away from the center of the explosion-proof valve body 100 is flush with a side wall of the notch 14 away from the center of the explosion-proof valve body 100. It can be understood that the scored groove 11 is provided at an edge of the bottom wall of the notch 14, the scored groove 11 may extend in a circumferential direction of the notch 14, and a side wall of one side of the scored groove 11 away from the center of the explosion-proof valve body 100 is a side wall of the notch 14.

Therefore, through the formation of the notch 14 on the explosion-proof valve body 100 and the formation of the scored groove 11 on the bottom wall of the notch 14, the thickness of the scored groove 11 and the thickness of the region defined within the scored groove 11 can be reduced, to facilitate the opening of the explosion-proof valve 200. In addition, the scored groove 11 can be protected to avoid the unintentional opening of the explosion-proof valve 200 caused by impact on the scored groove 11.

In some specific embodiments, as shown in FIG. 2, the explosion-proof valve body 100 includes a connection section 20, a buffer section 30, and a support section 40. The connection section 20 is connected to an outer peripheral side of the support section 40. The support section 40 is spaced apart from the connection section 20 in a thickness direction of the support section 40. The buffer section 30 is connected between the connection section 20 and the support section 40. For example, the connection section 20 and the support section 40 may both be arranged horizontally, and the connection section 20 is spaced apart from the support section 40 in a thickness direction of the explosion-proof valve body 100. One end of the buffer section 30 is connected to an inner peripheral side of the connection section 20, and the other end of the buffer section 30 is connected to the outer peripheral side of the support section 40. The connection section 20 of the explosion-proof valve body 100 may be connected to the housing or the cover plate by welding.

Therefore, with the arrangement of the buffer section 30, the direction of stress transmission in the connection section 20 can be changed, to prevent the stress from being directly transmitted to the support section 40 to lead to a decrease in the structural stability of the opening region 10. Specifically, for example, the buffer section 30 may be configured to absorb thermal stress generated when the explosion-proof valve 200 is welded to the housing or the cover plate of the battery 300, and prevent the explosion-proof scored groove 11 from being broken by thermal deformation during welding. In addition, the explosion-proof valve 200 can also be prevented from being twisted synchronously with the housing or the cover plate to damage the explosion-proof scored groove 11 and affect the opening pressure of the explosion-proof valve 200.

Further, referring to FIG. 1, the scored groove 11 is formed on the support section 40, and the opening region 10 is formed on the support section 40. The shape of the orthographic projection of the opening region 10 is non-circular. For example, the shape of the orthographic projection of the opening region 10 may be an oblong shape, which can relatively increase the area of the opening region 10. An outer contour of the orthographic projection of the opening region 10 includes: two first straight lines 12 arranged in parallel with each other, a first arc 13, and a second arc 132 opposite to the first arc 13. Each first straight line 12 is respectively connected to the first arc 13 and the second arc 132.

Optionally, the explosion-proof valve body 100 is an aluminum alloy part or a steel part. Therefore, the weight of the explosion-proof valve body 100 can be reduced, thereby achieving a lightweight design of the explosion-proof valve body 100. In addition, the aluminum alloy part or the steel part has good structural strength, which can improve the reliability of the explosion-proof valve body 100.

An embodiment of a second aspect of the present disclosure provides a battery 300, which, as shown in FIG. 6, includes the explosion-proof valve 200 according to the embodiment of the first aspect.

Specifically, the battery 300 further includes a housing (not shown) and a cover plate (not shown). At least one end of the housing is open for mounting the cover plate, a mounting hole (not shown) is formed in the housing or the cover plate, and the explosion-proof valve 200 is connected at the mounting hole. The connection section 20 of the explosion-proof valve 200 may be connected to the housing or the cover plate by welding.

According to the battery 300 of the embodiment of the present disclosure, with the use of the explosion-proof valve 200, a reliable connection between the explosion-proof valve 200 and the battery 300 and a good pressure relief capability can both be achieved, and the usage safety of the battery 300 can be improved.

In some embodiments, an energy density of the battery 300 is defined as E. E satisfies: 200 wh/kg≤E≤280 wh/kg. For example, E=250 wh/kg. However, the present disclosure is not limited thereto. Therefore, the energy density of the battery 300 is increased, and the overall performance of the battery 300 is improved. Moreover, the greater the energy of the battery 300, the larger the amount of active material or the higher the activity of material is required inside the battery 300. Such a battery 300 requires a more accurate design of the amount of gas discharged through the explosion-proof valve 200, so as to ensure timely opening in extreme cases, and avoid unintentional starting. The explosion-proof valve 200 of the above embodiment of the present disclosure can well meet this requirement.

An embodiment of a third aspect of the present disclosure provides a battery module 400, which, as shown in FIG. 6, includes the battery 300 according to the embodiment of the second aspect.

Specifically, the battery module 400 may include a plurality of batteries 300 arranged side by side, and the plurality of batteries 300 may be connected in series or in parallel. Therefore, with the use of the battery 300 in the battery module 400, the safety of the battery module 400 can be improved. The battery module 400 may further include two end plates (not shown) and two side plates (not shown). The two end plates are distributed at two ends of each of the plurality of batteries 300 in a first direction. The two side plates are distributed at two sides of each of the plurality of batteries 300 in a second direction. The end plates and the side plates are fixedly connected to fix the batteries 300. The first direction is perpendicular to the second direction. Of course, in other embodiments, the battery module 400 may further include two end plates and a cable tie (not shown), and the two end plates are distributed at two ends of each of the plurality of batteries 300 and fixed by the cable tie.

An embodiment of a fourth aspect of the present disclosure provides a battery pack 500, which, as shown in FIG. 6, includes the battery 300 according to the embodiment of the second aspect or the battery module 400 according to the embodiment of the third aspect. Therefore, with the use of the battery 300 or the battery module 400 in the battery pack 500, the usage safety of the battery pack 500 can be improved. For example, the battery pack 500 may include a tray, and the battery 300 or the battery module 400 is fixed in the tray. When the battery pack 500 is applied to a vehicle 600, the battery pack 500 is mounted on the vehicle 600 through the tray.

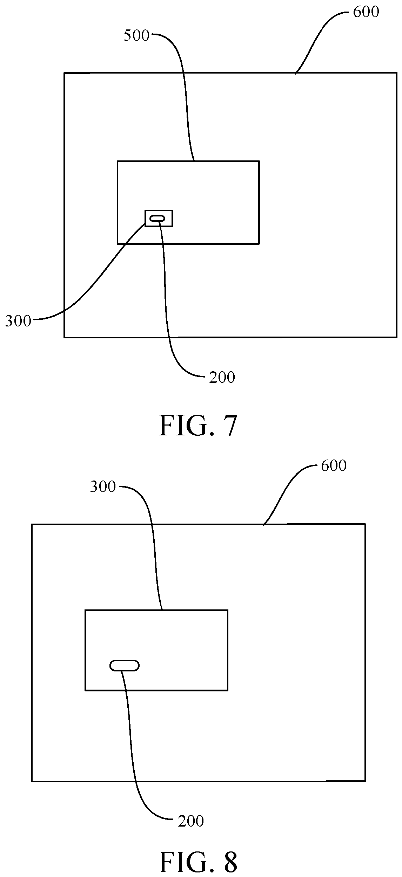

An embodiment of a fifth aspect of the present disclosure provides a vehicle 600, which, as shown in FIG. 6 to FIG. 8, includes the battery 300 according to the embodiment of the second aspect or the battery pack 500 according to the embodiment of the fourth aspect. Therefore, with the use of the battery pack 500 in the vehicle 600, the usage safety of the vehicle 600 can be improved. For example, in some embodiments, the battery 300 may be directly mounted on the vehicle 600. In some other embodiments, the battery 300 is assembled into a battery pack 500, and the battery pack 500 is mounted on the vehicle 600.

In addition, when the battery pack 500 is applied to the vehicle 600, the explosion-proof valve 200 may be arranged to face downward to prevent the discharged high-temperature gas from injuring occupants inside the vehicle 600.

In the description of the present disclosure, it should be understood that orientation or position relationships indicated by the terms such as "center", "length", "width", "thickness", "on", "below", "front", "rear", "left", "right", "top", "bottom", "inner", "outer", "axial", "radial", and "circumferential" are based on orientation or position relationships shown in the accompanying drawings, and are used only for ease and brevity of illustration and description, rather than indicating or implying that the mentioned apparatus or component need to have a particular orientation or need to be constructed and operated in a particular orientation. Therefore, such terms should not be construed as limiting of the present disclosure.

In the description of the present disclosure, "first feature" and "second feature" may include one or more features. In the description of the present disclosure, "multiple" and "a plurality of" mean two or more. In the description of the present disclosure, a first feature being "over" or "below" a second feature may mean that the first feature and the second feature are in direct contact, or the first feature and the second feature are not in direct contact but are in contact through another feature there between. In the description of the present disclosure, the first feature being "over", "above", and "on" the second feature includes that the first feature is directly above or obliquely above the second feature, or merely means that the horizontal height of the first feature is higher than the horizontal height of the second feature.

In the description of the specification, the description with reference to the terms "an embodiment", "some embodiments", "exemplary embodiments", "example", "specific example", or "some example" and so on means that specific features, structures, materials or characteristics described in connection with the embodiment or example are embraced in at least one embodiment or example of the present disclosure. In this specification, exemplary descriptions of the foregoing terms do not necessarily refer to the same embodiment or example.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

**Claims**

1. An explosion-proof valve (200), comprising:

   an explosion-proof valve body (100), the explosion-proof valve body (100) having a scored groove (11), the scored groove (11) comprising two first scored grooves (111), two second scored grooves (112), and a third scored groove (113), one end of each of the two first scored grooves (111) and one end of each of the two second scored grooves (112) being respectively connected to two ends of the third scored groove (113), another end of one of the two first scored grooves (111) extending away from another end of the other of the two first scored grooves (111), another end of one of the two second scored grooves (112) extending away from another end of the other of the two second scored grooves (112),

a length of the third scored groove (113) being defined as a, a distance between the other end of the first scored groove (111) and the other end of the second scored groove (112) being defined as b, a length of each of the first scored grooves (111) and a length of each of the second scored grooves (112) being equal and being both defined as c, an angle between the two first scored grooves (111) and an angle between the two second scored grooves (112) being equal and being both defined as $\alpha$, the explosion-proof valve body (100) comprising an opening region (10), an outer edge of an orthographic projection of the opening region (10) being a predetermined opening boundary (131) in a depth direction of the scored groove (11), an area of the orthographic projection of the opening region (10) being defined as S, S, c, and $\alpha$ respectively satisfying: S= $\frac{(a+b)\times c_2\sqrt{2(1-\cos\alpha)}}{2} + \frac{\pi c^2 \alpha}{180}$, S≥80 mm$^2$, c≥4 mm, and $\alpha$≥30°,

in the depth direction of the scored groove (11), a first arc (13) being defined between free ends of orthographic projections of the two first scored grooves (111), the first arc (13) being centered at a vertex of the angle $\alpha$ between the two first scored grooves (111), a second arc (132) being defined between free ends of orthographic projections of the two second scored grooves (112), the second arc (132) being centered at a vertex of the angle $\alpha$ between the two second scored grooves (112), a first straight line (12) being defined between free ends of the orthographic projections of the first scored groove (111) and the second scored groove (112) that are on the same side of the third scored groove (113), and the first arc (13), the second arc (132), and the two first straight lines (12) jointly forming the predetermined opening boundary (131).

2. The explosion-proof valve (200) according to claim 1, wherein c further satisfies: c≤10 mm.

3. The explosion-proof valve (200) according to claim 1 or 2, wherein $\alpha$ further satisfies: $\alpha$≤150°.

4. The explosion-proof valve (200) according to any one of claims 1-3, wherein a satisfies: 10 mm≤a≤40 mm.

5. The explosion-proof valve (200) according to any one of claims 1-4, wherein b satisfies: 15 mm≤b≤50 mm.

6. The explosion-proof valve (200) according to any one of claims 1-5, wherein the third scored groove (113) extends in a length direction of the explosion-proof valve body (100), one of the first scored grooves (111) extends toward one side in a width direction of the explosion-proof valve body (100), the other of the first scored grooves (111) extends toward another side in the width direction of the explosion-proof valve body (100), one of the second scored grooves (112) extends toward one side in the width direction of the explosion-proof valve body (100), and the other of the second scored grooves (112) extends toward another side in the width direction of the explosion-proof valve body (100).

7. The explosion-proof valve (200) according to any one of claims 1-6, wherein the scored groove (11) is of a centrosymmetric structure.

8. The explosion-proof valve (200) according to any one of claims 1-7, wherein a notch (14) is formed on the explosion-proof valve body (100), and the scored groove (11) is formed on a bottom wall of the notch (14).

9. The explosion-proof valve (200) according to claim 8, wherein a side wall of the scored groove (11) away from a center of the explosion-proof valve body (100) is flush with a side wall of the notch (14) away from the center of the explosion-proof valve body (100).

10. The explosion-proof valve (200) according to any one of claims 1-9, wherein the explosion-proof valve body (100) comprises a connection section (20), a buffer section (30), and a support section (40), the connection section (20) is connected to an outer peripheral side of the support section (40), the support section (40) is spaced apart from the connection section (20) in a thickness direction of the support section (40), the buffer section (30) is connected between the connection section (20) and the support section (40), and the scored groove (11) is formed on the support section (40).

11. The explosion-proof valve (200) according to any one of claims 1-10, wherein the explosion-proof valve body (100) is of a flat sheet structure.

12. The explosion-proof valve (200) according to any one of claims 1-11, wherein the opening region (10) is in an oblong shape.

13. The explosion-proof valve (200) according to any one of claims 1-12, wherein the explosion-proof valve body (100) is an aluminum alloy part or a steel part.

14. A battery (300), comprising the explosion-proof valve (200) according to any one of claims 1-13.

15. The battery (300) according to claim 14, wherein an energy density of the battery (300) is defined as E, wherein E satisfies: 200 wh/kg≤E≤280 wh/kg.

16. A battery module (400), comprising the battery (300) according to claim 14 or 15.

17. A battery pack (500), comprising the battery (300) according to claim 14 or 15 or the battery module (400) according to claim 16.

18. A vehicle (600), comprising the battery (300) according to claim 14 or 15 or the battery pack (500) according to claim 17.

Left ◄————► Right

FIG. 1

100

FIG. 2

FIG. 3

Comparative Example 2

Example 3                    Example 4

$y_1 = -0.00691x_1 + 20.61$; $r^2 = 0.95028$      $y_3 = -0.01599x_3 + 50.77$; $r^2 = 0.96295$

$y_2 = -0.02307x_2 + 70.19$; $r^2 = 0.96129$

Time (ms)

FIG. 4

13

FIG. 5

FIG. 6

600

500

300

200

**FIG. 7**

600

300

200

**FIG. 8**

## INTERNATIONAL SEARCH REPORT

| International application No. |
| --- |
| **PCT/CN2023/093638** |

| **A.** | **CLASSIFICATION OF SUBJECT MATTER** |
| --- | --- |

H01M50/342(2021.01)i

According to International Patent Classification (IPC) or to both national classification and IPC

| **B.** | **FIELDS SEARCHED** |
| --- | --- |

Minimum documentation searched (classification system followed by classification symbols)

H01M50/00

Documentation searched other than minimum documentation to the extent that such documents are included in the fields searched

Electronic data base consulted during the international search (name of data base and, where practicable, search terms used)

CNABS, CNTXT, DWPI, VEN, USTXT, CNKI: 电池, 防爆, 阀, 刻痕, 刻槽, 面积, 角, battery , explosion, valve, notch, groove, area, angle,

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| PX | CN 114628846 A (BYD CO., LTD.) 14 June 2022 (2022-06-14)<br>entire document | 1-18 |
| PX | CN 114628845 A (BYD CO., LTD.) 14 June 2022 (2022-06-14)<br>entire document | 1-18 |
| PX | CN 216980795 U (BYD CO., LTD.) 15 July 2022 (2022-07-15)<br>entire document | 1-18 |
| PX | CN 216980796 U (BYD CO., LTD.) 15 July 2022 (2022-07-15)<br>entire document | 1-18 |
| PX | CN 216980798 U (BYD CO., LTD.) 15 July 2022 (2022-07-15)<br>entire document | 1-18 |
| A | CN 108428836 A (NINGDE CONTEMPORARY AMPEREX TECHNOLOGY CO., LTD.)<br>21 August 2018 (2018-08-21)<br>description, paragraphs 56-93, and figure 4 | 1-18 |
| A | CN 109314202 A (SAMSUNG SDI CO., LTD.) 05 February 2019 (2019-02-05)<br>entire document | 1-18 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 July 2023** | **17 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/093638** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 212461953 U (HUIZHOU BYD BATTERY CO., LTD.) 02 February 2021 (2021-02-02) entire document | 1-18 |
| A | US 2016043367 A1 (SAMSUNG SDI CO., LTD.) 11 February 2016 (2016-02-11) entire document | 1-18 |

Form PCT/ISA/210 (second sheet) (July 2022)

## INTERNATIONAL SEARCH REPORT
### Information on patent family members

International application No.

**PCT/CN2023/093638**

| Patent document cited in search report | | | Publication date (day/month/year) | Patent family member(s) | | | Publication date (day/month/year) |
|---|---|---|---|---|---|---|---|
| CN | 114628846 | A | 14 June 2022 | None | | | |
| CN | 114628845 | A | 14 June 2022 | None | | | |
| CN | 216980795 | U | 15 July 2022 | None | | | |
| CN | 216980796 | U | 15 July 2022 | None | | | |
| CN | 216980798 | U | 15 July 2022 | None | | | |
| CN | 108428836 | A | 21 August 2018 | US | 2019214619 | A1 | 11 July 2019 |
| | | | | US | 10873066 | B2 | 22 December 2020 |
| | | | | EP | 3509133 | A1 | 10 July 2019 |
| CN | 109314202 | A | 05 February 2019 | WO | 2018012709 | A1 | 18 January 2018 |
| | | | | EP | 3486969 | A1 | 22 May 2019 |
| | | | | EP | 3486969 | A4 | 01 January 2020 |
| | | | | EP | 3486969 | B1 | 16 December 2020 |
| | | | | KR | 20180007189 | A | 22 January 2018 |
| | | | | US | 2019260069 | A1 | 22 August 2019 |
| | | | | US | 11502327 | B2 | 15 November 2022 |
| CN | 212461953 | U | 02 February 2021 | None | | | |
| US | 2016043367 | A1 | 11 February 2016 | US | 10135058 | B2 | 20 November 2018 |
| | | | | KR | 20160019611 | A | 22 February 2016 |
| | | | | KR | 102232530 | B1 | 26 March 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202221128933